# EUROPÄISCHE PATENTSCHRIFT

(11) **EP 3 024 685 B1**
(45) Veröffentlichungstag und Bekanntmachung des Hinweises auf die Patenterteilung: **06.09.2017**
(21) Anmeldenummer: 14744280.0
(22) Anmeldetag: 23.07.2014
(51) Int. Cl.: B60K 35/00, B60K 37/04, B60R 11/00, B60R 11/02

(54) **KRAFTFAHRZEUG MIT EINEM VERSENKBAREN BILDSCHIRM**
MOTOR VEHICLE HAVING A RETRACTABLE SCREEN
VÉHICULE AUTOMOBILE POURVU D'UN ÉCRAN ESCAMOTABLE

(30) Priorität: 26.07.2013 DE 102013012473
(43) Veröffentlichungstag der Anmeldung: 01.06.2016
(73) Patentinhaber: Audi AG, 85045 Ingolstadt (DE)
(72) Erfinder: WALL, Christian, 85122 Hitzhofen (DE); RICHTER, Stefan, 01127 Dresden (DE)
(86) Internationale Anmeldenummer: PCT/EP2014/002013
(87) Internationale Veröffentlichungsnummer: WO 2015/010786

(56) Entgegenhaltungen:
- WO-A1-2008/031812
- WO-A1-2013/146161
- DE-A1-102009 040 702

## Beschreibung

Die Erfindung betrifft ein Kraftfahrzeug, bei welchem ein Bildschirm einer Anzeigevorrichtung in einem Verkleidungsteil, beispielsweise einer Schalttafel oder einer Mittelkonsole, ein- und ausgefahren werden kann. Ein solcher Bildschirm ist beispielsweise aus der gattungsbildenden DE 10 2009 007 991 A1 bekannt. Danach ist der Bildschirm in einer Verdecktstellung in einem Inneren des Verkleidungsteils versenkt und in einer Gebrauchsstellung in einen Fahrgastraum des Kraftfahrzeugs gerichtet. Um den Bildschirm zwischen seiner Gebrauchsstellung und seiner Verdecktstellung zu bewegen, wird er durch einen Spalt in dem Verkleidungsteil ausgefahren beziehungsweise eingefahren. Damit der Bildschirm hierbei eine vorbestimmte Schwenkbewegung durchführt, muss er an seinen Seiten durch eine Kulissenführung geführt sein. Das Bereitstellen einer Kulissenführung zum seitlichen Führen des Bildschirms macht die Anzeigeeinrichtung unerwünscht breit.

Aus der DE 10 2007 033 534 A1 ist hierzu eine Führung des Bildschirms mittels einer Schiene bekannt, welche in einer Rückseite eines Gehäuses des Bildschirms ausgebildet ist. In diese Schiene greift ein Schlitten ein, welcher mit dem Verkleidungsteil verbunden ist. Um zum Herausfahren eine Kraft auf den Bildschirm ausüben zu können, ist ein zweiter Hebel nötig, in welchem eine Kulisse ausgebildet sein muss, damit der Kraftübertragungspunkt vom Hebel zum Bildschirm entlang des Hebels verlagert wird, während sich der Bildschirm aus dem Spalt heraus bewegt. Die Kulisse kann durch die Reibung beim Übertragen der Kraft verschließen, so dass ein Spiel entsteht. Aus der DE 600 20 192 T2 ist ein in ein Verkleidungsteil versenkbarer Bildschirm für ein Kraftfahrzeug bekannt, bei welchem eine Kraftübertragung zwischen einem Antriebsmotor und dem Bildschirm über Scheiben erfolgt, in welchen schraubenförmige oder spiralförmige Kulissen ausgebildet sind. Durch die verhältnismäßig kurzen Hebelwege wirkt aber ebenfalls eine entsprechend größere Kraft auf die Wandungen der Kulissen, so dass die Scheiben aus einem verhältnismäßig festen Material gebildet sein müssen, damit die Kulissen nicht durch Verschleiß breiter werden und sich hierdurch ein Spiel ergibt, welches bei einer Fahrt über eine holprige Strecke zu einem Klappern führen kann.

Aus der DE 10 2009 040 702 A1 ist eine Bildschirmverstelleinrichtung für ein Kraftfahrzeug bekannt, die einen Einbaurahmen zum Einbau in dem Kraftfahrzeug, einen Bildschirm oder einen Bildschirmträger zur Halterung eines solchen sowie eine Verstellmechanik zur Bewegung des Bildschirms oder Bildschirmträgers zwischen einer im Einbaurahmen zurückgezogenen Parkstellung und einer aus dem Einbaurahmen ausgefahrenen Betriebsstellung umfasst.

Aus der WO 2008/031812 A1 ist eine Bordmonitoreinrichtung für ein Kraftfahrzeug bekannt, mit einem Monitor, der mittels eines Antriebsmechanismus aus einer etwa waagrechten Inaktivlage innerhalb einer Ausnehmung einer Armaturentafel durch eine Öffnung der Ausnehmung in eine etwa senkrechte Aktivlage außerhalb der Ausnehmung sowie aus der Aktivlage in die Inaktivlage bewegbar antreibbar ist.
Der Erfindung liegt die Aufgabe zugrunde, bei einem Kraftfahrzeug in einem Verkleidungsteil eine Anzeigeneinrichtung mit ausfahrbarem Bildschirm bereitzustellen, wobei die Anzeigeeinrichtung verschleißarm und in der Bauweise kompakt ausgestaltet sein soll.

Die Aufgabe wird durch ein Kraftfahrzeug gemäß Patentanspruch 1 gelöst. Vorteilhafte Weiterbildungen der Erfindung sind durch die Unteransprüche gegeben.

Bei dem erfindungsgemäßen Kraftfahrzeug ist, ähnlich wie beim Stand der Technik, eine Anzeigeeinrichtung derart ausgestaltet, dass ein Bildschirm durch einen Spalt in einem Verkleidungsteil, also beispielsweise in einer Schalttafel oder einer Mittelkonsole, aus einer Verdecktstellung im Inneren des Verkleidungsteils in eine Gebrauchsstellung aus dem Verkleidungsteil heraus bewegt werden kann, so dass der Bildschirm in einen Fahrgastraum des Kraftfahrzeugs hineinragt, also beispielsweise seine Bildfläche zum Anzeigen von grafischen Bildinhalten auf einer Bildfläche senkrecht im Fahrgastraum steht. Der Bildschirm führt beim Herausfahren aus dem Verkleidungsteil und beim Wieder-Hereinfahren jeweils eine Schwenkbewegung aus, das heißt er wird nicht gerade senkrecht nach oben aus dem Spalt heraus- beziehungsweise wieder hineingefahren, sondern beim Herausfahren führt eine Oberkante des Bildschirms z.B. eine anfänglich schräg nach oben gerichtete Bewegung aus, die dann bogenförmig nach oben in Richtung zur Endposition für die Gebrauchsstellung führt.

Zum Erzeugen der Schwenkbewegung ist der Bildschirm erfindungsgemäß über zumindest ein Koppelgetriebe in dem Verkleidungsteil aufgehängt. Hierdurch ergibt sich der Vorteil, dass alle für das Lagern des Bildschirms und Verschwenken desselben im Verkleidungsteil bereitgestellten mechanischen Teile schmaler ausgestaltet sein können, als der Bildschirm breit ist. Außerdem sind nur verhältnismäßig verschleißarme Drehgelenke zur Realisierung eines Koppelgetriebes nötig. Bei jedem Koppelgetriebe kann es sich bei der einfachsten und damit robustesten Ausführungsform um ein viergliedriges Koppelgetriebe handeln.

Insbesondere ist dabei vorgesehen, dass zumindest eines der Koppelgetriebe zwei Schwenkelemente umfasst, von denen jedes beispielsweise als ein Stab oder eine Platte ausgestaltet sein kann. Allgemein ist mit Schwenkelement hier ein eigensteifes, als Getriebeglied des Koppelgetriebes wirkendes Element gemeint, welches an zwei gegenüberliegenden Enden jeweils über eine Lagereinrichtung, z.B. ein Drehgelenk, drehbar mit einem weiteren Teil gekoppelt ist. Jedes Schwenkelement ist dabei mit einer seiner Lagereinrichtungen an einer Trägerplatte befestigt, an welcher der Bildschirm drehfest gelagert ist. Mit der jeweils anderen Lagereinrichtung ist jedes Schwenkelement drehbar an dem Verkleidungsteil gelagert. Hierdurch ist also dann insgesamt die Trägerplatte im Inneren des Verkleidungsteils schwenkbar angeordnet. Die Trägerplatte bildet damit ein Koppelglied des Koppelgetriebes.

Bevorzugt ist jeweils ein Koppelgetriebe an gegenüberliegenden Seiten der Trägerplatte bereitgestellt. Hierdurch ergibt sich eine besonders torsionssteife Aufhängung. Es befinden sich dann also auf jeder Seite zwei Schwenkelemente, von denen jedes mit einem Ende über seine eine Lagereinrichtung drehbar an der Trägerplatte und über seine andere Lagereinrichtung an dem Verkleidungsteil gelagert ist.

Der Abstand der an dem Verkleidungsteil gelagerten Lagereinrichtungen der beiden Schenkelemente ist dabei bevorzugt kleiner als der Abstand der Lagereinrichtungen an der Trägerplatte. Die sich hieraus ergebende Hebelwirkung oder Getriebeumsetzung des Kurbelgetriebes ermöglicht es, die Anzeigeeinrichtung besonders kompakt auszugestalten.

Um eine Antriebskraft für die Schwenkbewegung des Bildschirms auf diesen zu übertragen, ist bevorzugt auf zumindest einer Seite die Trägerplatte eines der Schwenkelemente über einen elektrischen Drehmotor und ein Getriebe des Drehmotors, z.B. ein Zahnradgetriebe, drehbar mit dem Verkleidungsteil gekoppelt. Hier bildet also der Drehmotor zusammen mit seinem Getriebe eine der Lagereinrichtungen. Das Getriebe kann auch integraler Bestandteil des Drehmotors sein (Getriebemotor). Das angetriebene Schwenkelement bildet dann eine Kurbel in dem Koppelgetriebe, welches dabei eine Drehbewegung des Drehmotors in die Schwenkbewegung umwandelt, die dann auf den Bildschirm gemäß der Ausgestaltung des Koppelgetriebes übertragen wird. Das auf derselben Seite der Trägerplatte befindliche zweite Schwenkelement wirkt dann als Schwinge.

Bei dem erfindungsgemäßen Kraftfahrzeug ist durch die Verwendung eines oder mehrerer Koppelgetriebe die Aufhängung der Trägerplatte mit dem daran befestigten Bildschirm bereits so stabil, dass die Trägerplatte und der Bildschirm gemäß einer Ausführungsform der Erfindung mechanisch ausschließlich über das zumindest eine Schwenkelement in dem Verkleidungsteil gelagert sind. Eine Übertragung von Signalen und elektrischer Energie kann hierbei über flexible Kabel erfolgen. Die ausschließliche Verwendung von Schwenkelementen für die mechanische Lagerung ist besonders verschleißarm im Vergleich zu der Verwendung von z.B. Schienen oder Kulissen. Mit anderen Worten ist also bevorzugt die Anzeigeeinrichtung schienenlos und/oder kulissenlos in dem Verkleidungsteil gelagert. Dies macht die Bauform der Anzeigeeinrichtung auch besonders schmal in Längsrichtung des Spaltes, da keine über eine Länge des Spalts in Längsrichtung hinausstehenden, für die Kulissenführung oder Schienenführung nötigen Teile vorhanden sein müssen.

Mit einem oder mehreren Koppelgetrieben ist der Verlauf der Schwenkbewegung auch sehr genau einstellbar. Es ergibt sich die Möglichkeit, das Spaltmaß des Spaltes, also seine Spaltbreite (im Gegensatz zur größeren Spaltlänge), besonders gering zu wählen. Die Spaltbreite ist hier als der Abstand der beiden, den Spalt begrenzenden Wandungen entlang eines Normalenvektors senkrecht zur Bildfläche des Bildschirms in der Gebrauchsstellung gemessen. Im Verhältnis zur Bildschirmdicke entlang dieses Normalenvektors weist die Spaltbreite bevorzugt ein Verhältnis in einem Bereich zwischen 1,0 und 1,5 auf. Mit anderen Worten ist der Spalt nur geringfügig bis hin zum 1,5- fachen der Bildschirmdicke breit. Hierdurch ergibt sich der Vorteil, dass sich auch während der Schwenkbewegung zwischen dem Bildschirm einerseits und den Wandungen des Spalts andererseits kein Zwischenraum ergibt, durch welchen ein Benutzer der Anzeigeeinrichtung in das Innere des Verkleidungsteils hineinblicken könnte oder durch welchen beispielsweise Krümel oder andere kleine Gegenstände in das Innere des Verkleidungsteils fallen könnten.

Eine weitere vorteilhafte Ausführungsform sieht vor, dass in der Verdecktstellung, wenn also der Bildschirm in das Innere des Verkleidungsteils eingefahren ist, eine Wandung des Bildschirms den Spalt verschließt. Der Bildschirm wird dazu bevorzugt so weit in den Spalt eingefahren, das seine Schmalseite mit einer an den Spalt angrenzenden Oberfläche des Verkleidungsteils abschließt. Hierdurch kann dann auf einen separaten Deckel zum Verschließen des Spalts verzichtet werden.

Ein weiterer großer Vorteil besteht bei dem erfindungsgemäßen Kraftfahrzeug darin, dass eine Abmessung der Trägerplatte unabhängig von einer Abmessung des Bildschirms gewählt werden kann. Der Bildschirm muss lediglich fest mit der Trägerplatte verbunden werden können, und elektrische Anschlüsse des Bildschirms müssen mit einer bevorzugt auf der Trägerplatte angeordneten Platine mit einer Steuerschaltung für den Bildschirm verbunden werden können. Es können also bei der Anzeigeeinrichtung gemäß der Erfindung derselbe Trägerplattentyp und damit derselbe Typ Koppelgetriebe in unterschiedliche Kraftfahrzeugtypen eingebaut werden, bei welchen unterschiedliche Bildschirmtypen verwendet werden sollen. Die Abmessung der Trägerplatte in einer Längsrichtung des Spalts ist dabei bevorzugt kleiner oder höchstens gleich einer Abmessung des Bildschirms in dieser Längsrichtung. Damit bildet also der Bildschirm in Längsrichtung des Spalts, was in der Regel mit der Fahrzeugquerrichtung übereinstimmt, das breiteste Bauteil der Anzeigeeinrichtung. Damit können in unmittelbarer Nachbarschaft an den Spalt weitere elektrische und elektronische Komponenten des Kraftwagens angeordnet werden, wie beispielsweise Bedienelemente für eine Klimaanlage oder auch Tasten zum Bedienen eines Infotainmentsystems.

Das erfindungsgemäße Kraftfahrzeug ist bevorzugt als Kraftwagen, insbesondere als Personenkraftwagen ausgestaltet.

Im Folgenden ist die Erfindung noch einmal anhand eines konkreten Ausführungsbeispiels erläutert. Hierzu zeigt:
- Fig. 1: eine Ausführungsform des erfindungsgemäßen Kraftfahrzeugs, wobei ein Bildschirm einer Anzeigeeinrichtung in einer Verdecktstellung angeordnet ist;
- Fig. 2: das Kraftfahrzeug von Fig. 1, wobei der Bildschirm gerade durch einen Spalt in den Fahrzeuginnenraum bewegt wird; und
- Fig. 3: das Kraftfahrzeug von Fig. 1, wobei der Bildschirm sich in einer Gebrauchsstellung befindet.

Das Ausführungsbeispiel stellt eine bevorzugte Ausführungsform der Erfindung dar. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des weiteren ist die beschriebene Ausführungsform auch durch weitere bereits beschriebene Merkmale der Erfindung ergänzbar.

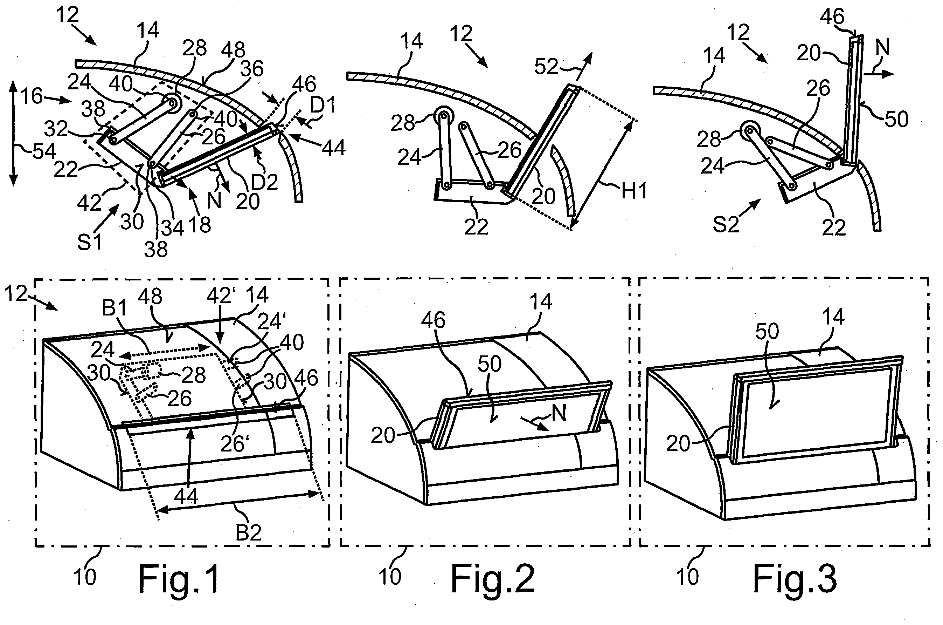

In Fig. 1 ist in einem unteren Teil von einem Kraftfahrzeug 10 perspektivisch ein Kraftfahrzeuginnenraum 12 gezeigt, in dem sich ein Verkleidungsteil 14 befinden kann, beispielsweise eine Mittelkonsole, eine Schalttafel oder ein in der Regel als Dome bezeichnetes, gewölbtes Verkleidungsteil, welches sich unter der Windschutzscheibe befinden kann. Im oberen Teil von Fig. 1 ist ein Querschnitt des Verkleidungsteils 14 mit einer im Inneren 16 des Verkleidungsteils 14 befindlichen Anzeigeeinrichtung 18. Die Anzeigeeinrichtung 18 kann einen Bildschirm 20, eine Trägerplatte 22, zwei Schwenkelemente 24, 26 und einen elektrischen Antriebsmotor 28 aufweisen.

Der Bildschirm 20 kann fest mit der Trägerplatte 22 verbunden sein. Auf der Trägerplatte 22 oder in diese integriert kann eine Elektronik zum Betreiben des Bildschirms 20 angeordnet sein. Der Bildschirm 20 kann z.B. auf einen elektrischen Anschluss der Trägerplatte 22 aufgesteckt sein.

Die Schwenkelemente 24, 26 können beispielsweise Stangen oder Platten umfassen. Die Schwenkelemente 24, 26 sind an einer Seite 30 der Trägerplatte 22 durch Drehgelenke 32, 34 gehalten. Auf einer gegenüberliegenden zweiten Seite 30' der Trägerplatte 22 können zwei weitere Schwenkelemente 24', 26' ebenfalls über Drehgelenke an der Trägerplatte 22 angeordnet sein. Die Schwenkelemente 24, 26, 24', 26' können in einem (nicht dargestellten) Aufhängungsbereich mit dem Verkleidungsteil 14 verbunden sein. Die Trägerplatte ist hierdurch in dem Verkleidungsteil 14 an den Schwenkelementen aufgehängt. Das Schwenkelement 24 kann mit einem Getriebe des Elektromotors 28 verbunden sein, so dass ein Rotor des Elektromotors 28 über das Getriebe das Schwenkelement 24 um eine Rotationsachse drehen kann. Das Schwenkelement 26 kann beispielsweise über ein Drehgelenk 36 mit einem festen Bestandteil des Verkleidungsteils 14 drehbar verbunden sein. Insgesamt sind so bei jedem Schwenkelement 24, 26, 24', 26' die jeweils gegenüberliegenden Enden 38, 40 drehbar gelagert, wobei die Enden 38 an der Trägerplatte 22 und die Enden 40 an dem Verkleidungsteil 14 drehbar gelagert sind. Insgesamt bilden so die Schwenkelemente 24, 26 und die Trägerplatte 22 ein einfaches Viergelenk 42 und entsprechend auch die Schwenkelemente 24' und 26' und die Trägerplatte 22 ein weiteres Viergelenk 42'. Durch Drehen der Welle des Elektromotors 28, also durch Betreiben des Elektromotors 28, kann mittels der durch die Viergelenke 42, 42' gebildeten Koppelgetriebe der Bildschirm 20 durch einen Spalt 44 des Verkleidungsteils 14 ausgefahren werden.

In Fig. 1 wird der Bildschirm 20 in einer Verdecktstellung S 1 gezeigt, in welcher eine Oberseite 46 des Bildschirms 20 mit einer Außenoberfläche 48 des Verkleidungsteils 14 bündig abschließen kann, so dass der Spalt 44 durch die Oberseite 46 verschlossen ist.

Durch Aktivieren des Elektromotors 28 mit dem Bildschirm 20 in seiner Verdecktstellung S 1, in welcher eine Bildfläche 50 sich vollständig im Inneren 16 des Verkleidungsteils 14 befindet, wird der Bildschirm 20 in einer Schwenkbewegung 52 (siehe Fig. 2) in eine Gebrauchsstellung S 2 (siehe Fig. 3) verfahren. Mit "im Inneren" ist gemeint, dass sich in der Verdecktstellung S 1 der Bildschirm bis auf seine Oberseite 46 vom Fahrzeuginnenraum aus gesehen hinter der Außenoberfläche 48 des Verkleidungsteils 14 befindet. In der Gebrauchsstellung S 2 ragt der Bildschirm 20 in den Fahrzeuginnenraum 12 hinein, so dass von einem Benutzer die Bildfläche 50 betrachtet werden kann. Durch eine umgekehrte Drehbewegung der Welle des Elektromotors 28 kann der Bildschirm 20 dann wieder von der Gebrauchsstellung S 2 in die Verdecktstellung S 1 in das Verkleidungsteil 14 eingefahren werden. Die Schwenkbewegung 52 kann durch Wahl der Abstände der jeweiligen Drehgelenke 38, 40 und eine Wahl der Länge der Schwenkelemente 24, 26 und 24' und 26' eingestellt sein. Auf jeder Seite 30, 30' des Trägerelements 22 kann eine Abstand der Drehgelenke 38 am Trägerelement 22 einerseits und ein Abstand der Drehgelenke 40 auf Seiten des Verkleidungsteils 14 andererseits unterschiedlich sein. Insbesondere ist der Abstand der Drehgelenke 40 kleiner als der Abstand der Drehgelenke 38.

Eine Breite B 1 der Trägerplatte 22 kann kleiner oder gleich einer Bildschirmbreite B 2 des Bildschirms 22 in einer Längsrichtung einer länglichen Erstreckung des Spalts 44 sein. Die Seiten 30, 30' ragen also in Richtung der Bildschirmbreite B 2, was hier der Fahrzeugsquerrichtung entspricht, nicht über die Ränder des Bildschirms 20 hinaus. Mit anderen Worten fluchten die Seiten 30, 30' mit den Rändern des Bildschirms 20 beziehungsweise bei B1 < B 2 ragen die Seiten des Bildschirms 20 über die Trägerplatte 22 in Richtung der Bildschirmbreite B 2, d.h. der Spaltlänge, hinaus.

Ein Verhältnis einer Spaltbreite D 1 zu einer Bildschirmdicke D 2 kann in einem Bereich von größer als 1,0 bis zu 1,5 liegen. Die Spaltbreite D 1 und die Bildschirmdicke D 2 sind hierbei Entlang einer Richtung einer Flächennormale N der Bildfläche 50 des Bildschirms 20 in der Gebrauchsstellung S 2. Die Bildschirmdicke D 2 kann insbesondere entlang einer gesamten Bildschirmhöhe H1 konstant sein.

Durch das Beispiel ist gezeigt, wie durch die Erfindung eine Display-Inszenierung für einen Bildschirm 22 und eine dazugehörige einfache Kinematik 42, 42' ermöglicht werden, bei der ein verhältnismäßig dünnes Display 20 (die Bildschirmdicke D 2 beträgt bevorzugt 1,5 cm oder weniger) aus einer Schalttafel 14 ausfährt, die ohne einen zusätzlichen Deckel auskommt. Hierbei wird eine speziell ausgelegte Viergelenkskinematik verwendet. Diese berücksichtigt die Parameter der Displaydicke D 2, die Ausfahrkurve 52, die Größe des Ausfahrspalts D 1 und ermöglicht insgesamt eine besonders geringe Bauhöhe 54 der gesamten mechanischen Einheit im eingefahrenen Zustand. Die gesamte Kinematik liegt hinter dem Display 20. Somit kommt es zu keiner künstlichen Verbreiterung des für den Benutzer sichtbaren Displays 20. Weiterhin ist diese Art der Kinematik geeignet, bei gleicher Mechanik unterschiedliche Displaybreiten aufnehmen zu können. Es ändert sich dann lediglich das Verhältnis B 1 zu B 2.

Insgesamt ist durch das Beispiel gezeigt, wie die folgenden Vorteile erlangt werden können. Es kann ein schlankes Display 20 mit einer geringen Dicke D 2 verwendet werden, ohne dass in der Verdecktstellung S 1 ein signifikanter Zwischenraum zwischen der Oberseite 46 und der umgebenden Berandung des Spalts 44 bleibt. Es ist eine einfache, robuste Mechanik mittels eines einfachen Viergelenks verwendbar. Die Bildschirmkinematik ist unabhängig von der Bildschirmbreite, da sich die Kinematik ausschließlich auf der Trägerplatte 22 und den Schwenkelementen 24, 26, 24', 26' und unabhängig von der Bildschirmbreite B 2 ergibt. Es ist kein zusätzlicher Deckel zum Verschließen des Spalts 44 bei eingefahrenem Bildschirm nötig. Die Ausfahrkurve gemäß der Schwenkbewegung 52 ist durch die Ausgestaltung der Schwenkelemente 24, 26, 24', 26' ausgestaltbar und kann hierdurch attraktiv und anmutig ausgestaltet werden. Insgesamt ergibt sich eine geringe Gesamtbauhöhe 54 im eingefahrenen Zustand.

Die beschriebenen Vorteile ergeben sich auch unter völligem Verzicht auf eine Kulissenführung. Die Displaydicke oder Bildschirmdicke D 2 muss nicht an die Kinematik angepasst werden, um den Spalt 44 verschließen zu können. Es ist hierdurch der Einsatz besonders flacher Displays möglich. Es ist eine sehr einfache, robuste Umsetzung der Drehbewegung 52 mit nur drei Teilen möglich, nämlich dem Antriebshebel (Schwenkelement 24), Zwischenhebel (Trägerplatte 22) und Abtriebshebel (Schwenkelement 26).

## Patentansprüche

1. Kraftfahrzeug (10) mit einem einen Spalt (44) aufweisenden Verkleidungsteil (14) und einer Anzeigeeinrichtung (18), bei welcher ein Bildschirm (20) in einer Verdecktstellung (S 1) in einem Inneren (16) des Verkleidungsteils (14) versenkt ist und in einer Gebrauchsstellung (S 2) in einen Fahrgastraum (12) des Kraftfahrzeugs (10) hineinragt, wobei die Anzeigeeinrichtung (18) dazu ausgelegt ist, den Bildschirm (20) zum Wechseln zwischen der Gebrauchsstellung (S 2) und der Verdecktstellung (S 1) in einer Schwenkbewegung (52) durch den Spalt (44) hindurch zu bewegen,
der Bildschirm (20) zum Erzeugen der Schwenkbewegung (52) über ein oder mehrere Koppelgetriebe (42, 42') mit dem Verkleidungsteil (14) verbunden ist,
wobei von dem zumindest einen Koppelgetriebe (42, 42') wenigstens eines davon zumindest zwei Schwenkelemente (24, 26, 24', 26'), von denen jedes an zwei gegenüberliegenden Enden drehbar gelagert ist, und eine über die zumindest zwei Schwenkelemente (24, 26, 24', 26') verschwenkbar im Inneren (16) des Verkleidungsteils (14) gelagerte Trägerplatte (22) umfasst, wobei der Bildschirm (20) drehfest an der Trägerplatte (22) gelagert ist, und wobei die Trägerplatte (22) und der Bildschirm (20) mechanisch ausschließlich über das zumindest eine Schwenkelement (24, 26, 24', 26') in dem Verkleidungsteil (14) gelagert sind,
**dadurch gekennzeichnet, dass**
die Trägerplatte (22) als Koppelglied des Koppelgetriebes (42, 42') wirkt.

2. Kraftfahrzeug (10) nach Anspruch 1, wobei jedes Koppelgetriebe (42, 42') viergliedrig ist.

3. Kraftfahrzeug (10) nach einem der vorhergehenden Ansprüche, wobei zumindest eines der Schwenkelemente (24) über ein Getriebe eines Drehmotors (28) oder einen Getriebemotor drehbar mit dem Verkleidungsteil (14) gekoppelt ist und hierdurch als Kurbel in dem Koppelgetriebe (42, 42') wirkt.

4. Kraftfahrzeug (10) nach einem der vorhergehenden Ansprüche, wobei die Anzeigeeinrichtung (18) schienenlos und/oder kulissenlos in dem Verkleidungsteil (14) gelagert ist.

5. Kraftfahrzeug (10) nach einem der vorhergehenden Ansprüche, wobei eine Spaltbreite (D 1), die als Abstand der den Spalt (44) begrenzenden Wandungen entlang eines Normalenvektors (N) senkrecht zur Bildfläche (15) des Bildschirms(20) in der Gebrauchsstellung gemessen wird, im Verhältnis zur Bildschirmdicke (D 2) entlang dieses Normalenvektors (N) ein Verhältnis in einem Bereich zwischen 1,0 und 1,5 aufweist.

6. Kraftfahrzeug (10) nach einem der vorhergehenden Ansprüche, wobei in der Verdecktstellung (S1) eine Wandung (46) des Bildschirms (20) den Spalt (44) verschließt.

7. Kraftfahrzeug (10) nach einem der vorhergehenden Ansprüche, wobei eine Abmessung (B 1) der Trägerplatte (22) in einer Längsrichtung des Spalts (44) kleiner oder gleich einer Abmessung (B 2) des Bildschirms (20) in der Längsrichtung ist.

8. Kraftfahrzeug (10) nach einem der vorhergehenden Ansprüche, wobei von einem Betrachtungspunkt aus gesehen, von welchem aus eine Bildfläche (50) des Bildschirms (20) in der Gebrauchsstellung (S 2) vom Fahrgastraum (12) aus einsehbar ist, alle für das Lagern des Bildschirms (20) im Verkleidungsteil (14) bereitgestellten mechanischen Teile (22, 24, 26, 24', 26', 28, 40) ohne seitlich entlang der Fahrzeugsquerachse überzustehen hinter dem Bildschirm (20) angeordnet sind.

## Claims

1. Motor vehicle (10) having a trim portion (14) which has a gap (44) and a display device (18), in which a screen (20) is recessed in a concealed position (S1) in an inner side (16) of the trim portion (14) and in a position for use (S2) protrudes into a passenger space (12) of the motor vehicle (10), wherein the display device (18) is configured to move the screen (20) for changing between the position for use (S2) and the concealed position (S1) in a pivoting movement (52) through the gap (44),
the screen (20) in order to produce the pivot movement (52) is connected to the trim portion (14) by means of one or more coupled gears (42, 42'),
wherein, of the at least one coupled gear (42, 42'), at least one of them comprises at least two pivoting elements (24, 26, 24', 26'), each of which is rotatably supported at two opposing ends, and a carrier plate (22) which is pivotably supported by means of the at least two pivot elements (24, 26, 24', 26') at the inner side (16) of the trim portion (14), wherein the screen (20) is supported on the carrier plate (22) in a rotationally secure manner, and wherein the carrier plate (22) and the screen (20) are mechanically supported in the trim portion (14) exclusively by means of the at least one pivot element (24, 26, 24', 26'),
**characterised in that** the carrier plate (22) acts as a coupling member of the coupled gear (42, 42').

2. Motor vehicle (10) according to claim 1, wherein each coupled gear (42, 42') is in four parts.

3. Motor vehicle (10) according to either of the preceding claims, wherein at least one of the pivot elements (24) is rotatably coupled to the trim portion (14) by means of a gear of a rotary motor (28) or a gear motor and thereby acts as a crank in the coupled gear (42, 42').

4. Motor vehicle (10) according to any one of the preceding claims, wherein the display device (18) is supported in a rail-free and/or slotted-member-free manner in the trim portion (14).

5. Motor vehicle (10) according to any one of the preceding claims, wherein a gap width (D1), which is measured as a spacing of the walls which delimit the gap (44) along a normal vector (N) perpendicular to the screen face (15) of the screen (20) in the position for use, has in relation to the screen thickness (D2) along this normal vector (N) a relationship in a range between 1.0 and 1.5.

6. Motor vehicle (10) according to any one of the preceding claims, wherein, in the concealed position (S1), a wall (46) of the screen (20) closes the gap (44).

7. Motor vehicle (10) according to any one of the preceding claims, wherein a dimension (B1) of the carrier plate (22) in a longitudinal direction of the gap (44) is smaller than or equal to a dimension (B2) of the screen (20) in the longitudinal direction.

8. Motor vehicle (10) according to any one of the preceding claims, wherein, when viewed from an observation location, from which a screen face (50) of the screen (20) in the position for use (S2) can be seen from the passenger space (12), all the mechanical components (22, 24, 26, 24', 26', 28, 40) which are provided to support the screen (20) in the trim portion (14) are arranged behind the screen (20) without protruding laterally along the transverse vehicle axis.

## Revendications

1. Véhicule automobile (10) avec une partie d'habillage (14) comportant une fente (44) et avec un dispositif d'affichage (18) tel que, dans une position cachée (S 1), un écran (20) est plongé dans un intérieur (16) de la partie d'habillage (14) et, dans une position d'usage (S 2), avance dans un habitacle (12) du véhicule automobile (10),
dans lequel le dispositif d'affichage (18) est conçu pour déplacer l'écran (20) dans un mouvement de pivotement (52) à travers la fente (44) en vue du basculement entre la position d'usage (S 2) et la position cachée (S 1),
dans lequel l'écran (20) est relié à la partie d'habillage (14) par l'intermédiaire d'un ou plusieurs mécanismes de couplage (42, 42') afin de produire le mouvement de pivotement (52),
dans lequel, parmi l'au moins un mécanisme de couplage (42, 42'), au moins l'un comprend au moins deux éléments pivotants (24, 26, 24', 26'), dont chacun est logé rotatif au niveau de deux extrémités opposées, et une plaque de support (22) logée pivotante dans l'intérieur (16) de la partie d'habillage (14) par l'intermédiaire des au moins deux éléments pivotants (24, 26, 24', 26'),
dans lequel l'écran (20) est logé, fixe en rotation, au niveau de la plaque de support (22)
et dans lequel la plaque de support (22) et l'écran (20) sont logés mécaniquement exclusivement par l'intermédiaire de l'au moins un élément pivotant (24, 26, 24', 26') dans la partie d'habillage (14),
**caractérisé en ce que** la plaque de support (22) agit comme un élément de couplage du mécanisme de couplage (42, 42').

2. Véhicule automobile (10) selon la revendication 1, dans lequel chaque mécanisme de couplage (42, 42') a quatre éléments.

3. Véhicule automobile (10) selon l'une des revendications précédentes, dans lequel au moins l'un des éléments pivotants (24) est couplé à la partie d'habillage (14) de manière à pouvoir tourner par l'intermédiaire d'une transmission d'un moteur couple (28) ou par l'intermédiaire d'un moteur-réducteur et agit ainsi comme manivelle dans le mécanisme de couplage (42, 42').

4. Véhicule automobile (10) selon l'une des revendications précédentes, dans lequel le dispositif d'affichage (18) est logé sans rail et/ou sans coulisse dans la partie d'habillage (14).

5. Véhicule automobile (10) selon l'une des revendications précédentes, dans lequel une largeur de fente (D 1), qui est mesurée comme la distance séparant les parois délimitant la fente (44) le long d'un vecteur normal (N) perpendiculairement à la surface d'image (15) de l'écran (20) en position d'usage, est dans un rapport compris entre 1,0 et 1,5 avec l'épaisseur d'écran (D 2) le long de ce vecteur normal (N).

6. Véhicule automobile (10) selon l'une des revendications précédentes, dans lequel, dans la position cachée (S 1), une paroi (46) de l'écran (20) obture la fente (44).

7. Véhicule automobile (10) selon l'une des revendications précédentes, dans lequel une dimension (B 1) de la plaque de support (22) dans le sens de la longueur de la fente (44) est inférieure ou égale à une dimension (B 2) de l'écran (20) dans le sens de la longueur.

8. Véhicule automobile (10) selon l'une des revendications précédentes, dans lequel, considéré à partir d'un point d'observation à partir duquel une surface d'image (50) de l'écran (20) peut être regardée de l'habitacle (12) dans la position d'usage (S 2), toutes les pièces mécaniques (22, 24, 26, 24', 26', 28, 40) prévues pour le logement de l'écran (20) dans la partie d'habillage (14) sont agencées derrière l'écran (20) sans dépasser latéralement le long de l'axe transversal de véhicule.
